**Europäisches Patentamt**

**European Patent Office**

**Office européen des brevets**

(11) Veröffentlichungsnummer: **0 146 653**
**A1**

## (12) EUROPÄISCHE PATENTANMELDUNG

(21) Anmeldenummer: 83113119.8

(22) Anmeldetag: 27.12.83

(51) Int. Cl.⁴: **H 04 N 7/18**
**H 04 N 9/04**

(43) Veröffentlichungstag der Anmeldung:
**03.07.85 Patentblatt 85/27**

(84) Benannte Vertragsstaaten:
**AT DE FR GB**

(71) Anmelder: **IBM DEUTSCHLAND GMBH**
**Pascalstrasse 100**
**D-7000 Stuttgart 80(DE)**

(84) Benannte Vertragsstaaten:
**DE**

(71) Anmelder · **International Business Machines**
**Corporation**
**Old Orchard Road**
**Armonk, N.Y. 10504(US)**

(84) Benannte Vertragsstaaten:
**FR GB AT**

(72) Erfinder: **Baier, Heinz, Ing.-Grad.**
**Schwenninger Strasse 14**
**D-7032 Sindelfingen(DE)**

(72) Erfinder: **Kallmeyer, Michael, Ing.-Grad.**
**Sperbergweg 24**
**D-7030 Böblingen(DE)**

(72) Erfinder: **Korth, Hans-Erdmann, Dipl.-Phys.**
**Sandbergstrasse 34**
**D-7000 Stuttgart(DE)**

(72) Erfinder: **Rösch, Hans, Dr. Dipl.-Ing.**
**Römersteinstrasse 4**
**D-7411 Reutlingen-Sondelfingen(DE)**

(74) Vertreter: **Teufel, Fritz, Dipl.-Phys.**
**IBM Deutschland GmbH. Europäische Patentdienste**
**Postfach 265**
**D-8000 München 22(DE)**

(54) **Farbvideokamera mit integriertem Digitalfilter.**

(57) Die Ausgangssignale (R, G, B) einer Farbvideokamera
(10) werden digitalisiert (in A/D-Konverten 11) und zusammen als Adreßsignale für einen Digitalspeicher (15) verwendet. Der Speicher enthält für jede R,G,B-Kombination einen
transformierten Bildwert (z.B. Grauwert), der in einem Prozessor (17) weiterverarbeitet oder nach Digital/Analogum-
wandlung (in D A-Konverter 19) auf einem Monitor (20)
dargestellt werden kann. Die Berechnung und die Abspeicherung der transformierten Bildwerte erfolgt durch den Prozessor (17) in Abhängigkeit der gewünschten spektralen
Empfindlichkeit der Farbvideokamera.

./...

FIG.1

## Farbvideokamera mit integriertem Digitalfilter

Die Erfindung betrifft eine Farbvideokamera nach dem Oberbegriff des Hauptanspruchs.

Beim Einsatz von Farbvideokameras, beispielsweise bei der Prozeßüberwachung, bei Aufgaben der Mustererkennung oder im Zusammenhang mit automatischen Manipulatoren ist es in vielen Fällen wünschenswert, nur einen begrenzten Teil des optischen Spektrums zu erfassen, um so kontrastreichere und besser zu verarbeitende Videoaufnahmen zu erhalten. Im Stand der Technik werden zu solchen Zwecken optische Filter verwendet, die dem Kameraobjektiv vorgeschaltet werden. Die Auswahl der mit optischen Filtern möglichen Wellenlängenbereichen ist jedoch begrenzt oder erfordert zumindest einen hohen Aufwand bei der Herstellung der Filter; dies gilt insbesondere für sehr schmalbandige Filter. Die oft wünschenswerte Anpassung der Filtercharakteristik an wechselnde Umgebungen ist beim Einsatz optischer Filter außerdem umständlich oder gar nicht durchführbar. Beispielsweise sind keine optischen Filter bekannt, die nur für einen einzigen Farbton unabhängig von Farbsättigung und Intensität durchlässig sind.

Bei vielen meßtechnischen Aufgaben dürfen andererseits die von der Kamera gelieferten Meßwerte durch die Filterung nicht verfälscht werden, da diese Grundlage für Berechnungen im Zuge von Bildverarbeitungsoperationen sind. Dies trifft insbesondere für Kameras zu, die Bestandteil eines Bildverarbeitungssystems sind, das ausschließlich mit Grauwerten arbeitet. In diesem Fall muß eine eindeutige Umsetzung der auszufilternden Spektralanteile in Grauwert erfolgen, um Verfälschungen des Verarbeitungsergebnisses zu verhindern.

GE 983 027

Die oben geschilderten Forderungen einer flexiblen spektralen Aussonderung in einem Farbvideobild können im Prinzip durch die bekannten Methoden der digitalen Bildverarbeitung erfüllt werden, die beispielsweise bei der Aufarbeitung von Satellitenaufnahmen Anwendung finden. Der dafür erforderliche Aufwand an Rechnern und an Verarbeitungszeit ist jedoch beträchtlich, so daß keine Echtzeit-Verarbeitung möglich ist.

Die vorliegende Erfindung stellt sich daher die Aufgabe, eine Farbvideokamera der eingangs genannten Art anzugeben, mit der ohne großen Schaltungsaufwand eine sofortige und flexibel handhabbare Ausfilterung von nahezu beliebigen Spektralbereichen möglich ist.

Diese Aufgabe wird durch die im Anspruch 1 gekennzeichnete Erfindung gelöst; Ausgestaltungen der Erfindung sind in den Unteransprüchen gekennzeichnet.

Bei der hier vorgeschlagenen Farbvideokamera werden die Ausgangssignale der Aufnahmeröhren für die drei Farbauszüge Rot, Grün, Blau digitalisiert und zur Adressierung eines Digitalspeichers mit wahlfreiem Zugriff verwendet, in dem für jede R,G,B-Kombination eine zugeordnete Größe gespeichert ist, die entweder einen Grauwert oder ein neues R,G,B-Tripel definiert. Die für jeden Punkt des Fernsehbildes aus dem Speicher ausgelesenen Werte bilden zusammen ein transformiertes Bild und können als Grundlage für eine digitale Weiterverarbeitung dienen oder aber auf einem Farb- oder Schwarzweiß-Monitor dargestellt werden.

Der Speicher erhält seine transformierten Bilddaten von einem angeschlossenen Prozessor, in dem diese Daten für

GE 983 027

den jeweiligen Filterungsvorgang berechnet werden können.

Der Speicher, der zur Aufnahme der transformierten Bilddaten notwendig ist, hat eine relativ geringe Kapazität (typischerweise unter 100 K Bytes) und kann mit einigen wenigen modernen monolithischen Halbleiterchips realisiert werden. Die Bildtransformation erfolgt in Echtzeit. Durch die Programmierbarkeit des hier vorgeschlagenen digitalen Filters kann eine schnelle Anpassung an wechselnde Umgebungen erfolgen, wobei alle Bild- und Farbparameter (Intensität, Farbton, Farbsättigung) frei wählbar sind. Lineare und nichtlineare Filterfunktionen sind ohne weiteres realisierbar, ebenso wie Normierungen der transformierten Bildsignale. Die Farbfernsehkamera selbst und das System, in dem sie eingesetzt ist, brauchen nicht verändert zu werden. Auch die Beleuchtung der beobachteten Szene braucht nicht geändert zu werden, da das Filter auf die jeweilige Beleuchtung abstimmbar ist.

Die hier vorgeschlagene Farbvideokamera eignet sich aufgrund ihrer möglichen sehr scharfen spektralen Begrenzung auch besonders für Meß- und Überwachungsvorgänge, z.B. in der Färbe- oder Druckindustrie. Bei Monitoraufgaben wird die Bildverarbeitung dadurch vereinfacht, daß nur die wirklich interessierenden Spektralbereiche von der Videokamera "gesehen" werden. Statt einzelner Farben können auch selektiv nur die unbunten Gegenstände eines Bildes ausgefiltert werden. Anwendungen in der Unterhaltungsindustrie sind ebenfalls möglich.

Ausführungsbeispiele der Erfindung werden nun anhand von Zeichnungen näher erläutert. Es zeigen:

GE 983 027

Fig. 1         ein Prinzipschaltbild einer herkömmli-
               chen Farbfernsehkamera mit einem ange-
               schlossenen digitalen Filter nach der
               vorliegenden Erfindung;

Fign. 2A, B    das bekannte Farbdreieck bzw. den Farb-
               kreis zur Erläuterung von Farbtransfor-
               mationen, wie sie mit einer Farbvideokamera nach Fig. 1 durchgeführt werden
               können und

Fig. 3         eine graphische Veranschaulichung der
               Filterfunktionen in einer Farbvideokamera nach Fig. 1.

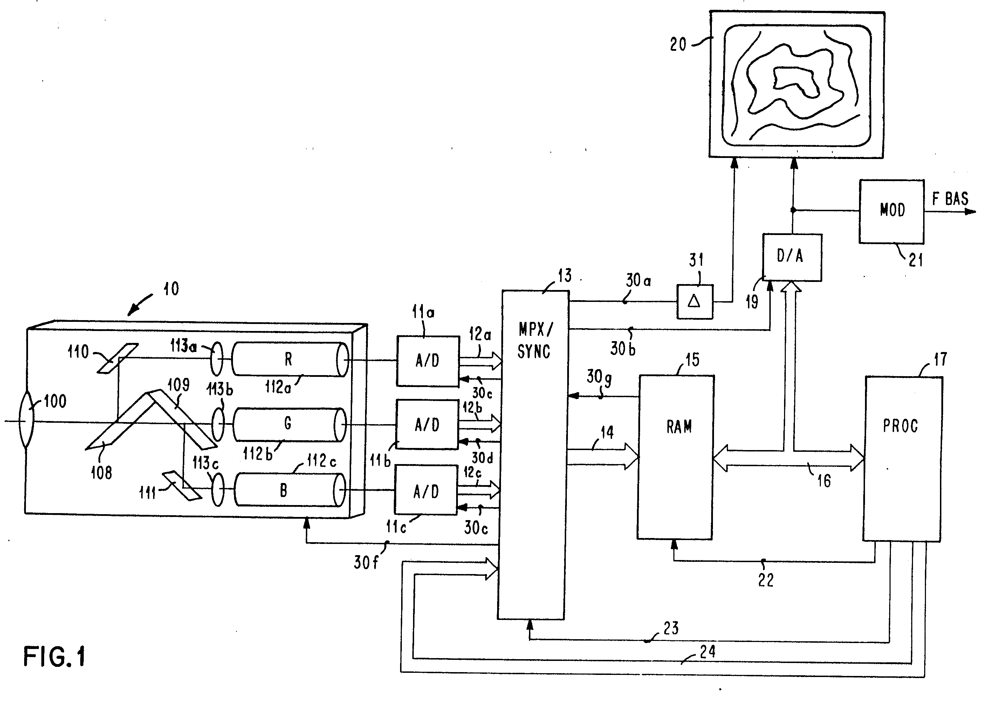

Fig. 1 zeigt eine herkömmlich aufgebaute Farbvideokamera 10 mit drei Aufnahmeröhren 112a bis 112c, die
jeweils einen Ausschnitt des Spektrums im roten (R),
im grünen (G) und im blauen (B) Bereich aufnehmen. Dazu
wird das durch die Eintrittsoptik 100 einfallende Licht
über Spiegel 108 bis 111 aufgespalten und durch Filter
113a bis 113c auf den gewünschten Spektralausschnitt
reduziert. Diese sogenannten Primärfarben liegen beispielsweise bei folgenden Wellenlängen:

$$R = 610 \text{ nm}$$
$$G = 535 \text{ nm}$$
$$B = 470 \text{ nm}.$$

Die Ausgänge der Aufnahmeröhren 112a bis 112c stellen
das bekannte R,G,B-Signal dar. Jedes dieser Signale
wird nun erfindungsgemäß zu einem zugeordneten Analog/
Digitalumsetzer 11a bis 11c gegeben, der den jeweiligen
Analogwert in ein beispielsweise fünfstelliges Binärwort umsetzt, das über Sammelleitungen 12a bis 12c zu

GE 983 027

einem Multiplexer 13 gegeben wird, der außerdem über Sammelleitung 24 ein weiteres 15stelliges Binärsignal von einem Prozessor 14 empfängt. Der Multiplexer kann vom Prozessor 14 über Leitung 23 so gesteuert werden, daß er entweder die 15 Signale der Sammelleitungen 12a bis 12c zusammen über Sammelleitung 14 (15stellig) abgibt oder das 15stellige Binärsignal der Sammelleitung 24. Sammelleitung 14 ist an den Adreßanschluß eines Speichers mit wahlfreiem Zugriff 15 angeschlossen, der in diesem Beispiel also eine Gesamtkapazität von $2^{15}$ = 32 K Bytes (oder Worten) aufweist. Der Speicher kann in der Betriebsart Lesen oder Schreiben betrieben werden, entsprechend dem Signal auf der Steuerleitung 22, die ebenfalls vom Prozessor 17 beaufschlagt wird. Der Datenanschluß des Digitalspeichers 15 ist über eine bidirektionale Datensammelleitung mit einer Breite von z.B. 8 Bits mit dem Prozessor 17 verbunden.

Die Verbindungen zwischen dem Rechner 14 und dem Speicher 15 (über die Sammelleitungen 16 und 22 bis 24) können auch lösbar ausgestaltet werden, beispielsweise wenn eine transportable Kamera gebaut werden soll, deren Filtercharakteristik nur gelegentlich Änderungen erfordert. Der Speicher 15 kann auch als Nurlese-Speicher aufgebaut werden, der eine nicht veränderliche Filtercharakteristik enthält.

Ein oder mehrere Digital/Analogumsetzer 19 sind über eine weitere Sammelleitung mit einer Breite von z.B. 8 Bits an die Sammelleitung 16 angeschlossen und liefern einen Analogausgang, der zur Steuerung eines Farb- oder Schwarzweiß-Monitors 20 dienen kann, je nachdem, ob ein Grauwertbild oder ein Schwarzweiß-Bild mit den ausgelesenen Speicherdaten erzeugt werden soll. Außerdem kann der Ausgang des Digital/Analogumsetzers 19

GE 983 027

wahlweise einer Modulationseinheit 21 zugeführt werden, die das bekannte FBAS-Signal erzeugt, wie es bei der Fernsehübertragung verwendet wird (und auch zur Ansteuerung des Monitors 20 eingesetzt werden kann).

Die einzelnen Komponenten der hier vorgeschlagenen Farbvideokamera werden synchron betrieben und empfangen dazu Synchronisiersignale von einer Synchronisiereinheit SYNC über Leitungen 30a, b, ... f. Die Synchronisiereinheit kann beispielsweise zusammen mit den handelsüblichen Multiplexschaltungen (z.B. vom Typ 74 S 157) auf einer Schaltkarte untergebracht werden. Die Analog/Digitalwandler (z.B. vom Typ TDC 1 014) und die Digital/Analogwandler (z.B. vom Typ TDC 1 016J-8) sind ebenfalls handelsübliche Bausteine. Bei der Auswahl der einzelnen Komponenten muß nur darauf geachtet werden, daß diese hinreichend schnell arbeiten, um die gewünschte Filterfunktion in Echtzeit durchführen zu können. Dazu reicht beispielsweise eine Taktfrequenz von 15 MHz aus. Zur Speicherung können schnelle bipolare Halbleiterspeicher eingesetzt werden, deren Zugriffszeit zwischen 30 und 60 Nanosekunden beträgt.

Bei Verwendung derartiger Komponenten beträgt die Verzögerungszeit infolge der Analog/Digitalumsetzung, des Auslesevorgangs aus dem Speicher und der anschließenden Digital/Analogumsetzung größenordnungsmäßig 200 Nanosekunden. Dies entspricht einem Versatz der verarbeiteten Bildinformation gegenüber den nichtverzögerten Synchronisiersignalen von ungefähr drei Bildpunkten auf dem Monitor 20. Um diesen Versatz auszugleichen, kann eine entsprechend große Verzögerung $\Delta$ in das Synchronisiersignal für den Monitor 20 eingebaut werden (z.B. mit Verzögerungsstrecke $\Delta$).

GE 983 027

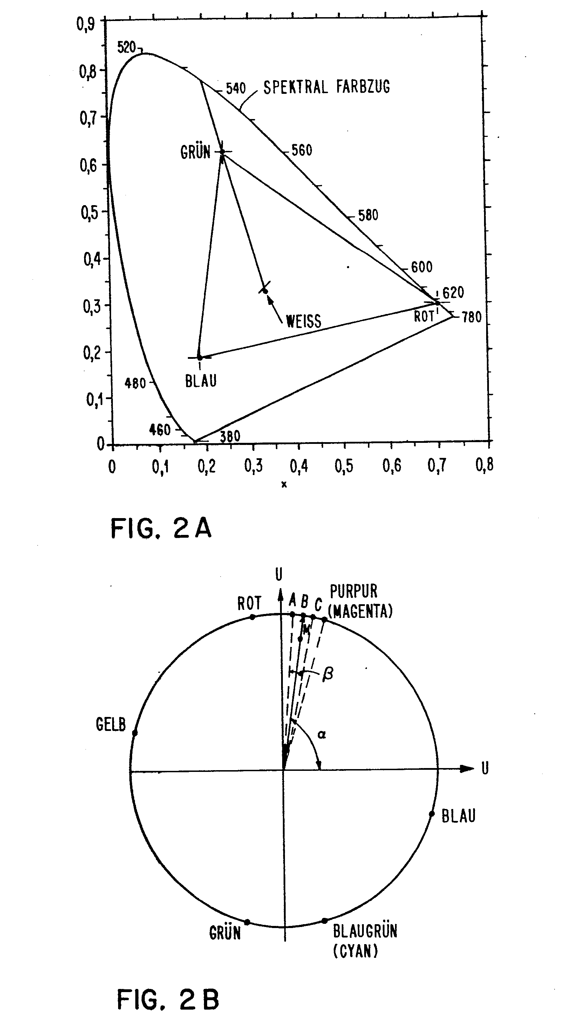

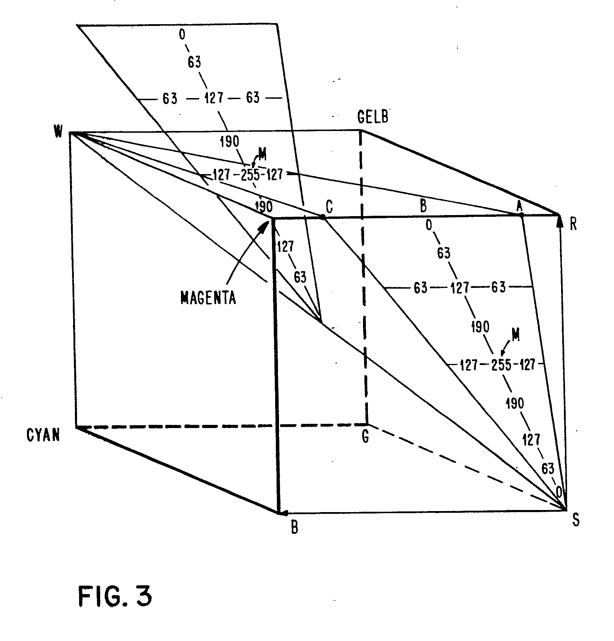

Die Wirkungweise der Farbvideokamera nach Fig. 1 wird nun anhand der Fign. 2A, B und 3 näher erläutert. In dem bekannten Farbdreieck nach Fig. 2A kann jede nach Farbton und Farbsättigung unterschiedene Farbart als x, y Paar dargestellt werden, wobei folgender Zusammenhang mit den R,G,B-Signalen besteht:

$$x = \frac{R}{R + G + B} \quad \text{und} \quad y = \frac{G}{R + G + B}$$

Für den sog. Unbuntpunkt (Weißpunkt) mit den Koordinaten $x = y = 0,33$ ergeben sich daraus die Werte $R = B = G = 0,33$, unter Beachtung, daß für die sog. Luminanz L die Beziehung gilt:

$$L = R + G + B = 1.$$

Jede Farbe kann durch Angabe von Farbart und Lumineszenz beschrieben werden. Die Eckpunkte Grün, Blau und Rot des in Fig. 2 eingezeichneten Dreiecks entsprechen der Farbempfindlichkeit der drei Aufnahmeröhren 112a bis 112c, so daß die innerhalb des Dreiecks liegenden Farben aufgenommen werden können. Ein bestimmter Farbton wird durch eine Gerade dargestellt, die vom Unbuntpunkt zu einem Punkt auf dem gekrümmt verlaufenden, sog. Spektralfarbenzug mit den dort angegebenen Wellenlängen in Nanometern verläuft. Die Sättigung für einen bestimmten Farbton nimmt dabei mit steigendem Abstand vom Unbuntpunkt zu.

Die Auswahl von Farbton und Farbsättigung, also die sog. Farbart, läßt sich anschaulicher im sog. Farbkreis der Fig. 2B erläutern, der aus dem Farbdreieck nach Fig. 2A entsteht, wenn der dortige Umfang (d.h. der Spektralfarbenzug) zu einem Kreis gebogen wird.

GE 983 027

Im Mittelpunkt des Farbkreises nach Fig. 2B liegt wieder der Unbuntpunkt, während die Spektralfarben entsprechend dieser Konstruktion auf dem Kreisumfang liegen. Alle Punkte eines bestimmten Farbtons liegen auf einer Mittelpunktsgeraden und können so durch deren Steigungswinkel $\alpha$ bestimmt werden. Die Farbsättigung ist durch den Abstand vom Mittelpunkt bestimmt. Die Intensität (oder Luminanz) ist in der Darstellung des Farbkreises als dritte Koordinate senkrecht zur Zeichenebene aufzufassen und spannt einen Kegel auf. Auf den Achsen des Farbkreises werden die sog. U,V-Signale aufgetragen, die in der Fernsehtechnik verwendet werden und den folgenden Linearkombinationen der Primärfarben entsprechen:

$$U = B - L, \qquad V = R - L.$$

Soll also das digitale Filter der hier beschriebenen Art für eine (oder mehrere) Farbtöne durchlässig sein, so müssen alle Speicheradressen, die den R,B,G-Kombinationen der betreffenden Geraden im Farbkreis entsprechen, mit transformierten Werten belegt sein, während alle anderen R,G,B-Adreßkombinationen mit den binären Werten Null aufgefüllt werden müssen. Beispielsweise kann gefordert werden, alle Farbarten innerhalb des Kreisausschnitts mit Öffnungswinkel $\beta$ um die Gerade mit Steigungswinkel $\alpha$ durchzulassen. Dabei soll die Farbart entsprechend Punkt M mit einem maximalen Grauwert (z.B. 255) dargestellt werden, während alle Farbarten auf dem Umfang des Kreisausschnitts den Grauwert Null zugeordnet erhalten sollen; zwischen diesen Werten soll jeweils linear interpoliert werden.

Fig. 3 zeigt eine graphische Darstellungsmöglichkeit der Filtercharakteristik eines digitalen Spektralfil-

GE 983 027

ters für Farbvideokameras nach der hier vorgeschlagenen Erfindung. In einem dreidimensionalen, rechtwinkligen Achsenkreuz werden die digitalisierten Werte der drei Farbauszüge R, G, B aufgetragen, so daß jeder Würfelpunkt einer bestimmten Farbart (nach Farbton und Farbsättigung) mit zugehöriger Lumineszenz entspricht. Die Würfelseiten mit den Achsen R-B, B-G und G-R enthalten die gesättigten Farben. Die Würfeldiagonale verbindet den Eckpunkt Schwarz (R = B = G = 0) mit dem Unbuntpunkt W und stellt alle Graupunkte (Unbuntpunkte) dar. Der Kantenzug Rot-Magenta-Blau-Cyan-Grün-Gelb-Rot entspricht dem Umfang des Farbkreises.

Werden entsprechend Fig. 1 bei der Digitalisierung der R,G,B-Werte jeweils 5 Bits erzeugt, so beträgt die Länge jeder Achse 32 Bits, und es entsteht ein Würfel mit 32 x 32 x 32 = 32 K Elementarzellen. Die Werte, die jeder Elementarzelle zugeordnet werden, bestimmten die Durchlaßcharakteristik des Spektralfilters.

Soll beispielsweise nur eine ganz bestimmte Farbart mit bestimmter Luminanz vom Filter durchgelassen und in einen Grauwert umgesetzt werden, so ist von allen 32 K Elementarzellen nur eine einzige Zelle mit einem Wert ≠ 0 belegt.

Soll das Digitalfilter nicht nur eine Umsetzung von Farben in bestimmte Grauwerte durchführen, sondern Farben von einem Teil des Spektrums in ein anderes umsetzen, so muß für jede der zu transformierenden RGB-Kombinationen die betreffende Elementarzelle mit einem Zahlentrippel belegt werden, das die gewünschten neuen R,G,B-Werte darstellt.

GE 983 027

Im folgenden wird als Beispiel für die Belegung des Würfels mit transformierten Grauwerten ein sog. Farbartfilter beschrieben, dessen Durchlaßcharakteristik durch den Kreisausschnitt mit Öffnungswinkel β in Fig. 2B gekennzeichnet ist. Die Umfangspunkte A, B, C von Fig. 2 erscheinen dann auf der Würfelkante Rot-Magenta, so daß auf der Würfelfläche mit den Achsen R-B ein Dreieck SAC aufgespannt wird, das alle gesättigten Farben dieser Farbart umfaßt.

Das Tetraeder, das durch den Weißpunkt W über dem Dreieck SAC aufgespannt wird, enthält alle Luminanzwerte, die zu den gesättigten Farben des Dreieckes SAC gehören. Da das gewünschte Farbartfilter unabhängig von der Luminanz sein soll, werden die Elementarzellen innerhalb dieses Tetraeders so belegt, wie es der Parallelverschiebung des Dreieckes SAC längs der Unbuntgeraden SW entspricht (wie es in Fig. 3 schematisch angedeutet ist). Damit wird auch die Belegung des Dreieckes ACW gleich der des Dreieckes ASC.

Die in Fig. 2 dargestellte Gerade mit Steigungwinkel α entspricht in Fig. 3 der Geraden VB. Der Punkt M, dessen Farbart definitionsgemäß dem größten Grauwert zugeordnet werden soll, erhält also beispielsweise den Digitalwert 255, wenn jede Elementarzelle des Würfels mit einem Byte aus 8 Bits belegt werden kann. Von diesem Mittelpunkt M soll der Grauwert linear bis zu den Randpunkten des Dreiecks SAC abfallen, so daß die entsprechenden Belegungen der Elementarzellen durch Extrapolation ermittelt werden können.

Mit der oben angegebenen Symmetrieeigenschaft der Dreiecke ACW und SAC vereinfacht sich die Berechnung der Werte, die in die jeweiligen Elementarzellen des Tetra-

GE 983 027

eders eingeschrieben werden müssen. Diese Berechnung erfolgt durch geeignet gewählte Programme, beispielsweise durch Eingabe der Parameter Steigungswinkel $\alpha$ und Öffnungswinkel $\beta$ des Ausschnittes im Farbkreis.

Anstelle des bisher betrachteten Würfels mit den Kanten R, G, B kann auch ein Würfel herangezogen werden, der durch die Achsen U, V, L aufgespannt wird (also die Farbdifferenzsignale und das Luminanzsignal). In diesem Fall ist jedoch nur ein kleiner Teil des Würfels mit Werten belegt, so daß die Speicherkapazität nur schlecht ausgenutzt ist.

P A T E N T A N S P R Ü C H E

1. Farbvideokamera mit drei elektronischen Ausgangssignalen, die Farbauszügen entsprechen,
dadurch gekennzeichnet,
daß jedes Ausgangssignal (R, G, B) einem zugeordneten Analog/Digitalwandler (11) zugeführt wird,
dessen Ausgang mit dem Adreßeingang eines Digitalspeichers (15) verbunden ist, und daß die adressierten Speicherstellen transformierte Bildwerte
in digitaler Darstellung enthalten.

2. Kamera nach Anspruch 1,
dadurch gekennzeichnet,
daß als Kameraausgangssignale die Signale der Primärfarben Rot (R), Grün (G) und Blau (B) verwendet
werden.

3. Kamera nach Anspruch 1 oder 2,
dadurch gekennzeichnet,
daß die gespeicherten transformierten Bildwerte
einem Grauwert entsprechen.

4. Kamera nach Anspruch 1 oder 2,
dadurch gekennzeichnet,
daß die gespeicherten Bildwerte einem Tripel von
Farbauszügen entsprechen.

5. Kamera nach einem der Ansprüche 1 bis 4,
dadurch gekennzeichnet,
daß die aus dem Digitalspeicher (15) ausgelesenen
transformierten Bildwerte mindestens einem Digi-
tal/Analogumsetzer (19) zugeführt werden, dessen
Ausgang mit einem Fernsehmonitor (20) verbunden
ist.

GE 983 027

6. Kamera nach einem der Ansprüche 1 bis 5,
dadurch gekennzeichnet,
daß die aus dem Digitalspeicher (15) ausgelesenen
transformierten Bildwerte im Rechner (14) weiterverarbeitet werden.

7. Kamera nach einem der Ansprüche 1 bis 6,
dadurch gekennzeichnet,
daß der Digitalspeicher (15) mit einem Rechner
(14) verbunden werden kann, der das Einlesen
von transformierten Bildwerten in den Digitalspeicher steuert.

8. Kamera nach einem der Ansprüche 1 bis 7,
dadurch gekennzeichnet,
daß die in der Kamera während der Bildabtastung
entstehenden Synchronisiersignale vor ihrer Weitergabe (z.B. an Monitor 20) entsprechend der
Zeitdauer ($\Delta$) verzögert werden, die zum Auslesen
der transformierten Bildwerte erforderlich ist.

9. Kamera nach einem der Ansprüche 1 bis 8,
dadurch gekennzeichnet,
daß zur Erzeugung eines Farbartfilters der als
Würfel gedachte Adreßraum des Digitalspeichers
(15) längs eines Tetraeders (WCAS) mit transformierten Bildwerten belegt wird, dessen eine Kante der Unbuntgeraden entspricht und bei dem die
Würfelflächen zwei Seiten bilden.

GE 983 027

FIG.1

FIG. 2 A

FIG. 2 B

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 084 195 (PHILIPS)<br>* Seite 1, Zeilen 1-16; Figur 1 *<br><br>----- | 1 | H 04 N 7/18<br>H 04 N 9/04 |

RECHERCHIERTE
SACHGEBIETE (Int. Cl ³)

H 04 N 7/00
H 04 N 9/00

Der vorliegende Recherchenbericht wurde für alle Patentansprüche erstellt.

| Recherchenort | Abschlußdatum der Recherche | Prüfer |
|---|---|---|
| BERLIN | 17-07-1984 | DUDLEY C. |